**Europäisches Patentamt**

**European Patent Office**

**Office européen des brevets**

(19)

(11) Veröffentlichungsnummer : **0 620 168 A1**

(12) # EUROPÄISCHE PATENTANMELDUNG

(21) Anmeldenummer : **94105667.3**

(22) Anmeldetag : **13.04.94**

(51) Int. Cl.$^5$ : **B65G 1/14**, F16B 5/02

(30) Priorität : **14.04.93 DE 9305585 U**

(43) Veröffentlichungstag der Anmeldung :
**19.10.94 Patentblatt 94/42**

(84) Benannte Vertragsstaaten :
**ES FR GB IT SE**

(71) Anmelder : **Croon & Lucke Maschinenfabrik
GmbH
Flachstrasse 14
D-88512 Mengen (DE)**

(72) Erfinder : **Schoeller, Heinz
Unter dem Staffel 22
D-78239 Rielasingen (DE)**

(74) Vertreter : **Weiss, Peter, Dr. rer.nat. et al
Dr. Peter Weiss & Partner
Postfach 12 50
D-78229 Engen (DE)**

(54) **Gestell zum Lagern von flächigen Werkstücken.**

(57) Bei einem Gestell zum Lagern von flächigen
Werkstücken, beispielsweise von durch Pressen hergestellte Teile eines Automobils, aus
einzelnen Stapelsäulen (3), soll ein Abstand
zwischen Säulenhalter (4) und Stapelsäule (3)
veränderbar sein.

Fig.1

Die Erfindung betrifft ein Gestell zum Lagern von flächigen Werkstücken, beispielsweise von durch Pressen hergestellte Teile eines Automobils, aus einzelnen Stapelsäulen.

Derartige Stapelsäulen sind in vielfältiger Form und Ausführung bekannt. Verwiesen wird insbesondere auf die DE-OS 38 11 310 oder die DE-OS 40 20 864. Der Aufbau derartiger Stapelsäulen birgt erhebliche Probleme in sich, da die einzelnen Stapelsäulen eine gleichbleibende vertikale Ausrichtung und einen gleichbleibenden Abstand voneinander aufweisen sollen, damit einzulagernde Teile ordnungsgemäß auf entsprechenden Klinken bzw. Auflager aufgenommen werden können. Deswegen gestaltet sich der Aufbau eines derartigen Gestells an Ort und Stelle sehr schwierig und zeitaufwendig, da die einzelnen Stapelsäulen genau ausgerichtet werden müssen. Bereits eine Abweichung im Milimeterbereich beim Aufsetzen auf einen Untergrund bewirkt eine Abweichung im Zentimeterbereich im oberen Teil der Stapelsäule. Wesentich ist dabei vor allem die Neigung der Stapelsäulen zueinander. Eine Lösung dieses Problems zeigt das Deutsche Gebrauchsmuster 92 03 901. Dort ist das Stapelprofil mit einem Schutzprofil lösbar verbunden.

Die dort gezeigte Lösung genügt jedoch nicht in allen Fällen. Zum einen ist nicht immer ein Schutzprofil notwendig, zum anderen wird oft auch eine Neigung der Stapelsäule in eine andere Richtung als zueinander verlangt.

Der vorliegenden Erfindung liegt die Aufgabe zugrunde, ein Gestell der o.g. Art zu entwickeln, bei dem die Stapelsäulen sehr variabel einstellbar sind.

Zur Lösung dieser Aufgabe führt, daß ein Abstand zwischen Säulenhalter und Stapelsäule veränderbar ist. Losgelöst von der Frage des Schutzprofils gemäß dem deutschen Gebrauchsmuster 92 03 901 hat im vorliegenden Fall der Säulenhalter lediglich die Aufgabe, eine gewünschte Schrägstellung der Stapelsäule ohne großen Aufwand zuzulassen. In der bevorzugten Form ist selbstverständlich dieser Säulenhalter ebenfalls als ein Schutzprofil entsprechend dem eben genannten Gebrauchsmuster ausgebildet. Dies sollte, muß aber nicht sein. In einem einfachen Ausführungsbeispiel genügt als Säulenhalter eine einfache vertikale Leiste.

Sowohl das bekannte Schutzprofil als auch die einfache vertikale Leiste soll das Verschwenken der Stapelsäule in zumindest einer, bevorzugt jedoch in zumindest zwei Ebenen ermöglichen. Diese Ebenen sollen etwa senkrecht zueinander angeordnet sein. Damit bietet es sich an, die Möglichkeit der Verstellung nach dem Gebrauchsmuster 92 03 901 mit der vorliegenden Erfindung zu kombinieren. Auch dies soll vom erfinderischen Gedanken umfaßt sein.

Um in geeigneter Weise die Stapelsäule am Säulenhalter festzulegen, dürften zumindest zwei beabstandete Befestigungsstellen notwendig sein. Um die Veränderbarkeit des Abstandes der beiden Teile bzw. des Zwischenraumes zwischen den beiden Teilen zu gewährleisten, bietet sich eine Schraube mit einem Gewindeabschnitt an, wobei die Schraube den Säulenhalter und beispielsweise eine Schiene der Stapelsäule miteinander verbindet. Im einfachsten Ausführungsbeispiel durchsetzt die Schraube eines der beiden Teile und greift in eine Gewindebohrung in dem anderen Teil ein. Je nach dem, wie weit die Schraube in die Gewindebohrung eingedreht ist, erfolgt die Bestimmung einer Neigung der Stapelsäule. Um einen gewünschten Abstand festzulegen, könnten in den Zwischenraum entsprechende Klemmkeile eingesetzt werden. Dies ist eine einfache aber auch recht unsaubere Lösung.

Eine andere Möglichkeit besteht darin, daß die Schraube mittels einer Hülse oder einer Mutter zuerst an dem Säulenhalter oder der Schiene der Stapelsäule festgelegt wird. Damit befindet sich die Hülse bzw. Mutter im Zwischenraum zwischen Säulenhalter und Stapelsäule. Nunmehr kann auf ein Außengewinde der Hülse eine Überwurfmutter aufgesetzt werden, über die der Abstand zwischen Säulenhalter und Stapelsäule veränderbar ist. Zur Halterung der gesamten Einheit muß allerdings noch andererseits eines Schraubenkopfes eine weitere Mutter außerhalb des Zwischenraumes dem Gewindeabschnitt aufgeschraubt werden. Diese Lösung ist besser, jedoch insofern umständlich, als die Überwurfmutter im Zwischenraum zwischen Säulenhalter und Stapelsäule schwerer zugänglich ist.

In einem bevorzugten Ausführungsbeispiel ist dem Gewindeabschnitt eine Flanschhülse aufgeschraubt, deren Hülsenteil entweder die Schiene der Stapelsäule oder den Säulenhalter durchsetzt und deren Flanschteile im Zwischenraum angeordnet ist. Wird diese Flanschhülse gedreht, so wird der Gewindeabschnitt entweder ausgestoßen oder eingezogen. Ein Drehen der Flanschhülse kann allerdings von außen her beispielsweise mittels eines Schraubenziehers erfolgen, so daß hier eine bessere Handhabbarkeit vorgesehen ist. Zur Sicherung der Flanschhülse ist dem Hülsenteil andererseits des Flanschteiles ebenfalls eine Mutter aufgesetzt.

Es versteht sich von selbst, daß auch noch weitere Möglichkeiten denkbar sind, wie der Abstand zwischen Säulenhalter und Stapelsäule auch über die ganze Länge des Zwischenraumes unterschiedlich verändert werden kann. Diese Möglichkeiten sollen auch vom Erfindungsgedanken umfaßt sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Figur 1 einen teilweise geschnitten dargestellten Teilaufriß einer Stapelsäule im Bereich ihrer Festlegung an einem Säulenhalter;

Figur 2 eine Ansicht entsprechend Figur 1, jedoch mit einem Ausführungsbeispiel einer Festlegung der Stapelsäule an dem Säulenhalter.

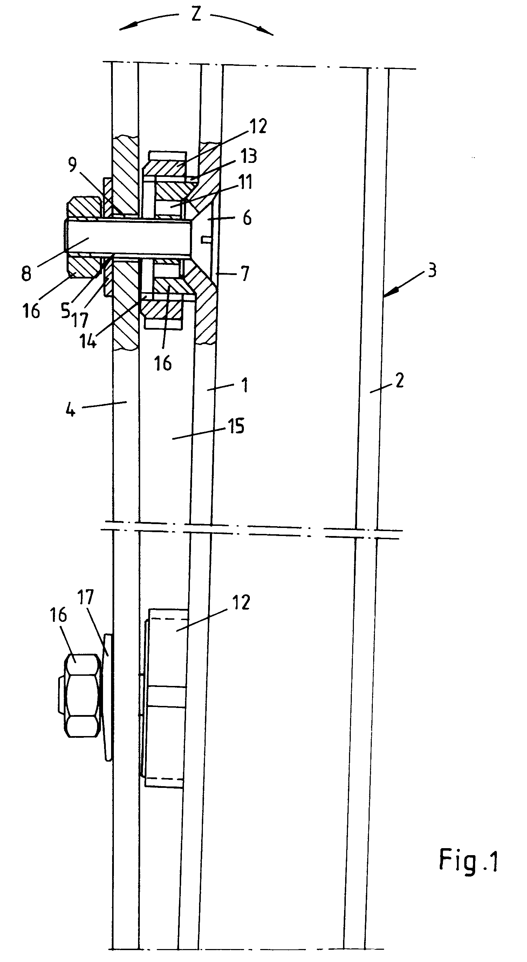

In Figur 1 sind zwei Schienen 1 und 2 einer Stapelsäule 3 zu erkennen. Eine derartige Stapelsäule dient zum Lagern von insbesondere flächenförmigen Werkstücken, wie beispielsweise Autoteilen, wobei in der Regel vier oder mehr derartiger Stapelsäulen auf einer Grundplatte angeordnet sind. Eine derartige Stapelsäule ist beispielsweise in der DE-OS 38 11 310 oder der DE-OS 40 20 864 beschrieben. Gemäß der vorliegenden Erfindung befindet sich die Stapelsäule 3 jedoch nicht auf einer Grundplatte, sondern ist an einem Säulenhalter 4 befestigt. Dieser Säulenhalter 4 kann ein beliebiges Profil sein, bevorzugt jedoch ein Schutzprofil, wie dies in dem Gebrauchsmuster G 92 03 901.4 beschrieben ist.

Zur Festlegung der Stapelsäule 3 an dem Säulenhalter 4 sind zumindest zwei Befestigungsbereiche vorgesehen, welche jedoch bevorzugt gleich ausgebildet sind. Im Bereich der Befestigung durchsetzt eine Schraube 5 von innen her die Schiene 1 der Stapelsäule 3 und den Säulenhalter 4. Zur Aufnahme eines Senkkopfes 6 der Schraube 5 ist in die Schiene 1 ein Senkloch 7 eingeformt. Zum Durchgriff für einen Gewindeabschnitt 8 der Schraube 5 weist der Säulenhalter 4 bevorzugt ein Langloch 9 auf, so daß es möglich ist, die Stapelsäule 3 aus der Zeichnungsebene zu kippen.

Wesentlicher Teil der vorliegenden Erfindung ist jedoch auch eine senkrecht dazu mögliche seitliche Verstellung der Stapelsäule 3 in Richtung des Doppelpfeiles z. Um dies zu ermöglichen ist zwischen dem Säulenhalter 4 und der Schiene 1 dem Gewindeabschnitt 8 eine Mutter 10 aufgeschraubt, welche die Schraube 5 festlegt und selbst ggfs. durch Stifte drehfest gesichert ist, wobei diese Stifte entsprechende Bohrungen 11 in der Mutter 10 durchgreifen.

Auf der Mutter 10 sitzt eine Überwurfmutter 12, welche auf ein Außengewinde 13 der Hülse 10 aufgeschraubt ist. Hierzu besitzt die Überwurfmutter 12 ein Innengewinde 14.

Die Überwurfmutter 12 ist mit einem entsprechenden Schlüssel durch den Zwischenraum 15 zwischen Säulenhalter 4 und Schiene 1 angreifbar und kann so verstellt werden. Bei ihrer Verstellung drückt sie die Stapelsäule 3 mehr oder weniger stark von dem Säulenhalter 4 weg.

Nach Erreichen einer gewünschten Schrägstellung der Stapelsäule 3 gegenüber dem Säulenhalter 4 wird eine Mutter 16 auf dem Gewindeabschnitt 8 angezogen, so daß diese Mutter 16 ggfs. unter Zwischenlage einer Unterlagsscheibe 17 auf den Säulenhalter 4 drückt und die Schraube 5 und damit die Stapelsäule 3 anzieht.

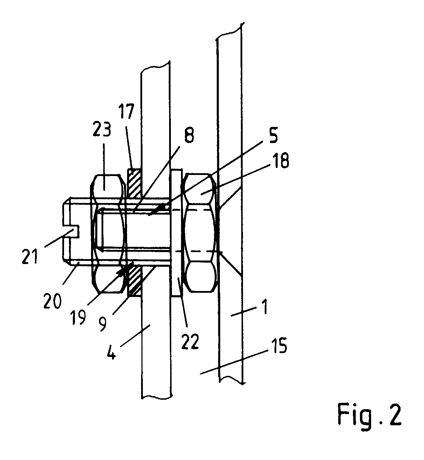

In Figur 2 ist ein weiteres Ausführungsbeispiel einer Befestigungsmöglichkeit zwischen einem Säulenhalter 4 und einer Stapelsäule 3 gezeigt. Von der Stapelsäule 3 ist lediglich eine Schiene 1 dargestellt. Auch hier durchsetzt eine Schraube 5 die Schiene 1 und den Säulenhalter 4, wobei auf den Gewindeabschnitt 8 der Schraube 5 im Zwischenraum 15 zur Halterung der Schraube 5 an der Schiene 1 eine Mutter 18 aufgeschraubt ist.

Des weiteren ist dem Gewindeabschnitt 8 eine Flanschhülse 19 aufgeschraubt, wobei ein Innengewinde der Flanschhülse 19 mit dem Außengewinde des Gewindeabschnitts 8 zusammenwirkt. Ein entsprechendes Hülsenteil 20 der Flanschhülse 19 dreht spielfrei in dem Langloch 9 und besitzt einen Schlitz 21 zur Aufnahme eines entsprechenden Drehwerkzeuges, wie beispielsweise eines Schraubenziehers. Im Zwischenraum 15 ist zwischen der Mutter -18 und dem Säulenhalter 4 ein Flanschteil 22 der Flanschhülse 19 angeordnet, wobei dieses Flanschteil 22 von innen her an den Säulenhalter 4 anschließt.

Ferner ist auf das Hülsenteil 20 andererseits des Flanschteiles 22 eine Mutter 23 ggfs. unter Zwischenlage der Unterlegscheibe 17 aufgeschraubt.

Eine Verstellung der Stapelsäule gegenüber dem Säulenhalter 4 erfolgt durch Lösen der Mutter 23, wodurch die Flanschhülse 19 gedreht werden kann. Bei einer Drehung der Flanschhülse 19 erfolgt jedoch eine waagrechte Lageveränderung der Schraube 5 und damit der Stapelsäule 3.

| POSITIONSZAHLENLISTE | | | | | | |
|---|---|---|---|---|---|---|
| 1 | Schiene | 34 | | | | |
| 2 | " | 35 | | | | |
| 3 | Stapelsäule | 36 | | | | |
| 4 | Säulenhalter | 37 | | | | |
| 5 | Schraube | 38 | | | | |
| 6 | Senkkopf | 39 | | | | |
| 7 | Senkloch | 40 | | | | |
| 8 | Gewindeabschnitt | 41 | | | | |
| 9 | Langloch | 42 | | | | |
| 10 | Hülse | 43 | | | | |
| 11 | Bohrung | 44 | | | | |
| 12 | Überwurfmutter | 45 | | | | |
| 13 | Außengewinde | 46 | | | | |
| 14 | Innengewinde | 47 | | | | |
| 15 | Zwischenraum | 48 | | | | |
| 16 | Mutter | 49 | | | | |
| 17 | Unterlagsscheibe | 50 | | | | |
| 18 | Mutter | 51 | | | | |
| 19 | Flanschhülse | 52 | | | | |
| 20 | Hülsenteil | 53 | | | | |
| 21 | Flanschteil | 54 | | | | |
| 22 | Mutter | 55 | | | | |
| 23 | | 56 | | | | |
| 24 | | 57 | | | | |
| 25 | | 58 | | | | |
| 26 | | 59 | | | | |
| 27 | | 60 | | | Z | Verstellung |
| 28 | | 61 | | | | |
| 29 | | 62 | | | | |
| 30 | | 63 | | | | |
| 31 | | 64 | | | | |
| 32 | | 65 | | | | |
| 33 | | 66 | | | | |

**Patentansprüche**

1.  Gestell zum Lagern von flächigen Werkstücken, beispielsweise von durch Pressen hergestellte Teile ei-

4

nes Automobils, aus einzelnen Stapelsäulen (3),
dadurch gekennzeichnet,
daß ein Abstand zwischen Säulenhalter (4) und Stapelsäule (3) veränderbar ist.

2. Gestell nach Anspruch 1, dadurch gekennzeichnet, daß die Stapelsäule (3) scherend gegenüber dem Säulenhalter (4) bewegbar ist.

3. Gestell nach Anspruch 1 oder 2, dadurch gekennzeichnet, daß der Abstand zwischen Säulenhalter (4) und Stapelsäule (3) über die Länge eines Zwischenraumes (15) zwischen beiden unterschiedlich ist.

4. Gestell nach einem der Ansprüche 1 bis 3, dadurch gekennzeichnet, daß Säulenhalter (4) und Stapelsäule (3) an zumindest zwei beabstandeten Befestigungsstellen miteinander verbunden sind.

5. Gestell nach Anspruch 4, dadurch gekennzeichent, daß in der Befestigungsstelle eine Schraube (5) mit einem Gewindeabschnitt (8) den Säulenhalter (4) und eine Schiene (1) der Stapelsäule (3) durchsetzt.

6. Gestell nach Anspruch 5, dadurch gekennzeichnet, daß im Zwischenraum (15) auf den Gewindeabschnitt (8) eine Hülse (10) oder Mutter (18) zum Festlegen der Schraube (5) aufgeschraubt ist.

7. Gestell nach Anspruch 6, dadurch gekennzeichnet, daß die Hülse (10) ein Außengewinde (13) aufweist, auf das eine Überwurfmutter (12) mit Innengewinde (14) aufgeschraubt ist.

8. Gestell nach Anspruch 6, dadurch gekennzeichnet, daß auf den Gewindeabschnitt (8) eine Flanschhülse (19) aufgeschraubt ist, deren Flanschteil (22) sich im Zwischenraum (15) befindet und deren Hülsenteil (20) den Säulenhalter (4) oder die Stapelsäule (3) durchsetzt.

9. Gestell nach Anspruch 8, dadurch gekennzeichnet, daß auf dem Hülsenteil (20) eine Mutter (23) sitzt.

10. Gestell nach Anspruch 8 oder 9, dadurch gekennzeichnet, daß das Hülsenteil (20) einen Schlitz (21) od. dgl. Aufnahme für ein Werkzeug aufweist.

Fig.1

Fig. 2

Europäisches
Patentamt

**EUROPÄISCHER RECHERCHENBERICHT**

Nummer der Anmeldung

EP 94 10 5667

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| D,X | DE-U-92 03 901 (CROON & LUCKE MASCHINENFABRIK GMBH) * Seite 7, Zeile 10 - Zeile 16; Ansprüche; Abbildungen * --- | 1-4 | B65G1/14 F16B5/02 |
| A | DE-U-92 17 488 (ADAM OPEL AG) * das ganze Dokument * --- | 5-7 | |
| A | FR-A-2 443 604 (FIRMA KARL LOHER) * Seite 7, Zeile 19 - Seite 8, Zeile 24; Abbildungen * ----- | 8,9 | |

| | | | RECHERCHIERTE SACHGEBIETE (Int.Cl.5) |
|---|---|---|---|
| | | | B65G F16B |

Der vorliegende Recherchenbericht wurde für alle Patentansprüche erstellt

| Recherchenort | Abschlußdatum der Recherche | Prüfer |
|---|---|---|
| DEN HAAG | 18. Juli 1994 | Van Rolleghem, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P04C03)